# EUROPEAN PATENT APPLICATION

(11) **EP 0 971 067 A1**
(43) Date of publication of application: **12.01.2000**
(21) Application number: 99202251.7
(22) Date of filing: 09.07.1999
(51) Int. Cl.: D21D 5/02, B01D 29/11

(54) **Device for seperating solid particles out of a suspension existing substantially of liquid**

(30) Priority: 10.07.1998 NL 1009609
(71) Applicant: RainboWW B.V., 5431 SH Cuijk (NL)
(72) Inventor: de Wolff, Pieter Jannes, 5854 HB Nieuwbergen (NL); Engelen, Martinus Petrus Wilhelmus, 5709 RJ Helmond (NL); van Wezel, Hendrik-Jan, 6573 CJ Beek Opbergen (NL)
(74) Representative: Verhees, Godefridus Josephus Maria

(57) **Abstract**

A device comprising a cylindrical filter present in a housing and a screw-shaped element present in the cylindrical space inside the filter. During operation drive elements are responsible for the rotation of the element at a speed of at least 100 revolutions per minute.

The screw thread of the element has two flanks of which the flank present upstream during operation has at least one surface that is at an angle with the filter such that the space between this surface and the filter decreases in the direction of flow and the substance, during rotation of the element, is pressed through the filter

In order to prevent the filter becoming clogged the flank located downstream slants considerably and the filter is thin, such that downstream from the screw thread the pressure in the medium drops considerably and the filter that was bent outward under pressure springs back and thus comes to vibrate during rotation of the element, such that the clogged particles are removed from the filter.

## Description

### BACKGROUND OF THE INVENTION:

### Field of the invention

The invention relates to a device for separating solid particles from a substance consisting chiefly of liquid, comprising a cylindrical filter present in a housing, an inlet port to the cylindrical space inside the filter, an outlet port in the space between the filter and the housing and a rotating element present in the cylindrical space inside the filter, which element has two flanks of which during operation one is upstream and one is downstream, with the flank upstream has such a shape that the space between this flank and the filter narrows in the direction of flow. Such devices are used for such purposes as purifying liquids, including water.

### Prior art

A device of the type described in the preamble is known from the American patent specification US 5.385.240. In this known device the rotating elements are formed by wing profiles that are fastened to a shaft via arms. These wing profiles cause positive and negative pressure surges on the filter, such that the capacity of the device is increased and the filter openings remain open. Thus only a part of the substance flows between the wing profiles and through the filter. Most of the substance flows under the wing profiles.

### Summary of the invention

An objective of the invention is to provide a device of the type described in the preamble that is better than the known device of the type. Thus the device according to the invention is characterised by the fact that the rotating element is formed by a screw-shaped element whose flanks form the sides of the screw thread. A screw should be understood to mean a cylinder in which a spiral-shaped slot is cut or pressed out. The screw thread is de spiral-shaped elevated part formed by the joint turns of a screw. Here a screw-shaped element should also be understood to mean an element with a screw thread with a lead angle of 90° (so where the turns of the screw thread run parallel to the longitudinal axis of the element). Due to the screw shape of the rotating element the substance cannot flow through under the flanks but the substance is completely brought to the space between the flank and the filter. In this way a much higher pressure can be realised at the site of the filter in the substance than in the known device, such that even if the filter has a finer mesh higher flow speeds can be realised and thus a better and faster filtering is possible.

It should be noted that from the American patent specification US 5.176.261 a device is known with a rotating element provided with vanes. Here the substance is also brought completely between the vanes and the filter. However, this known element, too, is not screw-shaped. The vanes are fastened to a cylinder instead of there being slots in the cylinder. In addition, these vanes have notches over their entire length. Thus the effective flanks are present further from the filter than in the device according to the invention, resulting in a lower pressure build-up in the substance. This makes the capacity lower than that of the device according to the invention.

A production technically favourable embodiment of the device is characterised by the fact that the flank of the screw thread present upstream during operation comprises at least one flat surface that is at an angle between 5° and 45° in relation to the filter. A flat surface here means a surface that is not curved.

To prevent clogging of the filter as far as possible and to open any possible clogged points, a further embodiment is characterised by the fact that the flank of the screw tread present downstream during operation has such a form that the space between this flank and the filter becomes wider in the direction of flow. Thus the pressure built up in the substance as it went upstream decreases as it goes downstream so that the filter, that was bent outside underpressure, springs back and thus vibrates during rotation of the element, so that the clogged areas in the filter are cleared.

A production technically favourable embodiment of this is characterised by the fact that the flank of the screw tread that is present downstream during operation comprises at least one flat surface that is at an angle between 5° and 45° in relation to the filter.

To increase the pressure in the substance near the filter and to maintain that pressure for an extended period of time, a further embodiment is characterised by the fact that between the two flanks the screw thread has a surface with at least virtually the same curvature as that of the filter.

To further improve the filtering another embodiment is characterised by the fact that the depth of the turns of the screw thread from one end to the other end of the screw-shaped element decreases.

The discharge of the filtered out solid particles from the substance forms a problem in itself. The solid particles sink to the bottom in the filter from where they should be discharged. Here the least possible amount of substance must leak away and care must be taken that due to the discharge the pressure in the substance does not decrease significantly.

An embodiment of the device according to the invention in which a discharge of solid particles is realised that fulfils the standards set above is characterised by the fact that the rotating element has an end that cooperates with a bearing element in the housing, such that the cooperating parts have congruent conical shapes and the end of the rotating element has the shape of a truncated cone and the bearing element in the housing is funnel-shaped with an opening in the middle. The conical surfaces form a bearing for the rotating element such that the solid particles sink between the surfaces to the opening and are thus carried away. Due to the weight of the rotating element and the pressure in the substance that presses the rotating element in the direction of the bearing element the split between the bearing surfaces is kept small, so that not much substance can leak away.

It should be noted that this construction of cooperating cones can also be used independently of the above described construction of the device with a screw-shaped element, and that specifically the option is kept open of splitting this embodiment from that one and claiming it in a device independent of the one with a screw-shaped element.

To further limit the leaking away of the substance and to further the discharge of solid particles, a further embodiment is characterised by the fact that in one of the surfaces of the parts that work together there are spiral-shaped grooves, preferably the spiral-shaped grooves are present in the conical surface of the end of the rotating element.

Another further improvement for the discharge of the solid particles and limiting the leaking away of substance is characterised by the fact that the spiral-shaped grooves become shallower from their periphery in the direction of the centre.

To obtain both a good bearing function for the bearing of the rotating element and a good displacement function for the discharge of solid particles, a further embodiment is characterised by the fact that the portion of the tangent at the innermost point of a spiral-shaped groove, between that point and the periphery, viewed in rotational direction of the rotating element is present behind the radius through that point or runs at least almost equal to the radius through this point. Through this shape no point occurs along the spiral line where a pressure peak arises. With a different spiral shape a pressure peak could indeed occur because the substance is pushed toward a certain point from two directions. This is not the case with the spiral shape according to this embodiment. Here displacement of the substance along the entire spiral takes place in a single direction, specifically from the periphery toward the centre. Thus no clogging can occur. In addition, through the viscosity of the substance with the solid particles a sufficient pressure build-up occurs for a good bearing function. Because the displacement function, however, dominates, clogging is prevented.

### Brief description of the drawings

The invention will be elucidated more fully below on the basis of drawings in which an embodiment of the device according to the invention is shown. In these drawings:
Figure 1 is a cross section of an embodiment of the device according to the invention;
Figure 2 is a top view of the screw-shaped element of the device;
Figure 3 is a side view of the screw-shaped element;
Figure 4 is a bottom view of the screw-shaped element;
Figure 5 is an developed view of the screw-shaped element;
Figure 6 is a cross section of a portion of the screw-shaped element and the filter;
Figure 7 is a bottom view of the end of the screw-shaped element;
Figure 8 is a cross section of the end of the screw-shaped element;
Figure 9 is a top view of the bearing element of the housing; and
Figure 10 is a cross section of the bearing element.

### Detailed description of the drawings

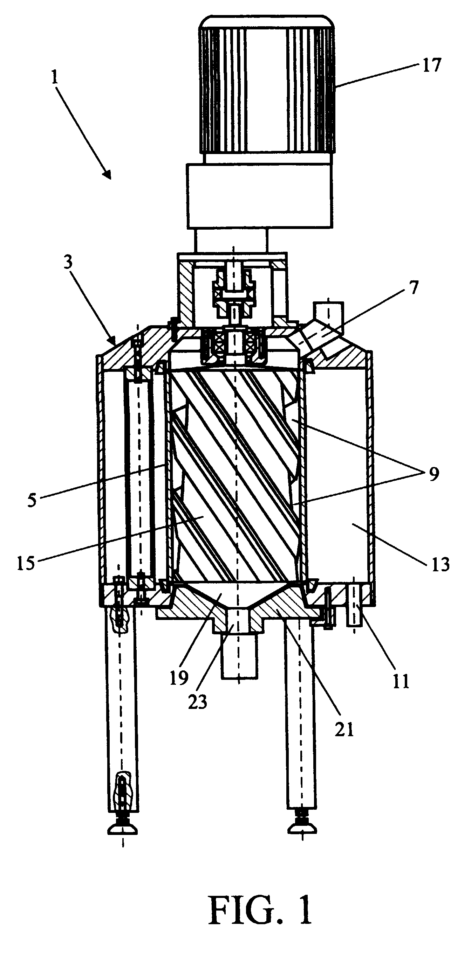

Figure 1 shows an embodiment of the device for separating solid particles from a substance consisting chiefly of liquid according to the invention in cross section. The device 1 has a housing 3 in which a cylindrical filter 5 is clamped. The housing 3 is provided with an inlet port 7 to the cylindrical space 9 inside the filter 5 and an outlet port 11 in the space 13 between the filter 5 and the housing 3. In the cylindrical space 9 inside the filter 5 there is a rotating element 15 that is screw-shaped and serves to push the substance to be filtered through the filter 5. The device 1 also has drive elements 17 for rotating the element 15 at speeds of more than 100 revolutions per minute and preferably between 1000 and 1500 revolutions per minute.

The rotating element 15 has bearings on the underside. For this purpose an end 19 of the rotating element 15 has the shape of a truncated cone. The end 19 is carried by a bearing element 21 present in the housing 3. The bearing element 21 has the shape of a funnel with an opening 23 in the centre. In the conical surface of the end 19 there are spiral-shaped grooves that transport the solid particles that are held back by the filter 5 to the opening 23. The opening 23 is partially or entirely closeable for adjusting the pressure build-up in the bearings and of the flow of solid particles to the opening.

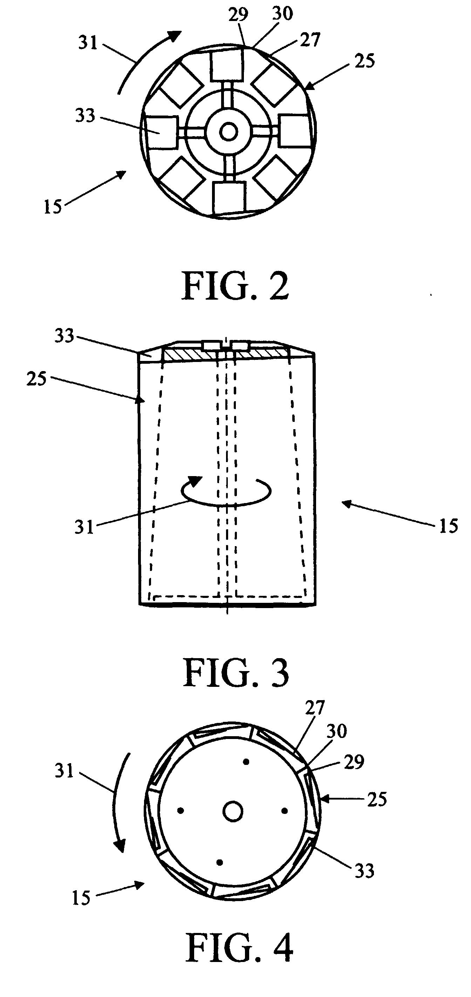

In Figures 2, 3 and 4 the screw-shaped element 15 is shown in top, side, and bottom views. The screw thread 25 has two flanks 27 and 29 with a surface 30 between them with the same curvature as the filter 5. The element 15 rotates to the left during operation according to arrow 31, while the substance first flowing over the flank 27 present upstream during operation and then over the flank 29 present downstream. The turns 33 of the screw thread 25 have a greater depth on the top side than on the underside.

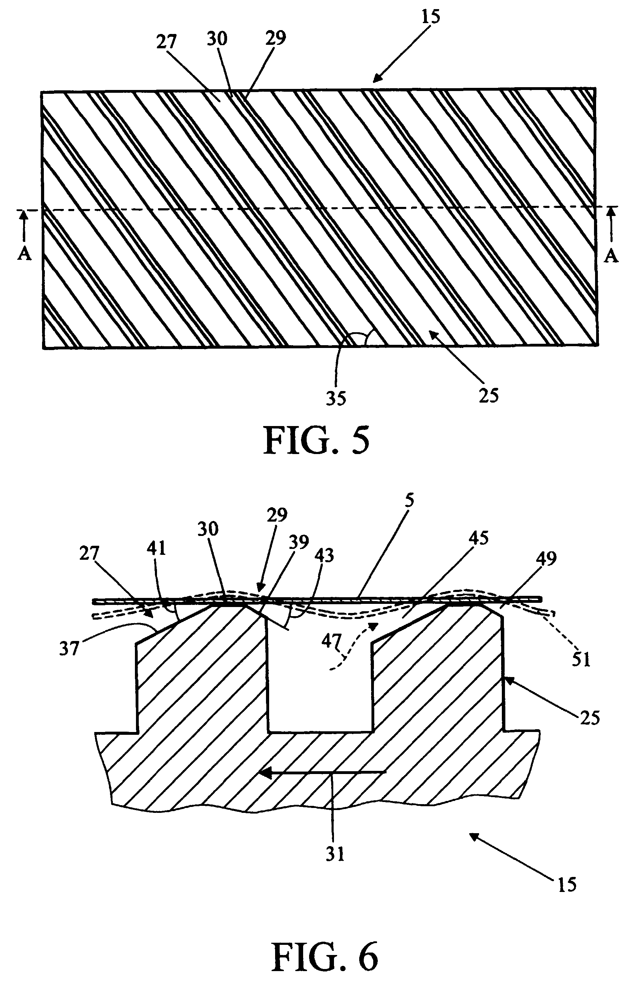

Figure 5 shows the developed side wall of the screw-shaped element 15. The screw thread 25 has 8 turns and a lead angle 35 of 55°. In Figure 6 a part of the screw-shaped element 15 is shown in cross section along line A-A according to Figure 5 . Each flank 27 and 29 has a straight surface 37 and 39. The surfaces 37 and 39 are at angles 41 and 43 with the filter 5. The space 45 between the flank 27 and the filter 5 narrows in the direction of flow 47. Through this shape of the flank 27 pressure is built up in the substance during rotation and the substance is pressed against the filter 5. The surface 30 makes sure that the pressure remains present for a period of time.

The space 49 between the flank 29 and the filter 5 widens in the direction of flow 47 such that the pressure in the substance drops sharply. During rotation the filter 5 upstream is deformed outward by the pressure build-up in the substance as a result of the rotation of the element 15. This is shown with the broken line 51. After the passing of the highest point of the screw thread 25 the pressure in the substance ceases, such that the filter 5 springs back. Through the fast succession of passing flanks the filter 5 is made to vibrate, such that clogging particles are pressed out of the openings in the filter. The filter 5 is formed in this embodiment by a sieve that has a thickness of 150 µm. The sieve must not be too thick because otherwise it would become too stiff and there would be insufficient vibration to prevent clogging as far as possible and to remove any clogging that may occur. To obtain good filtering the sieve is provided with openings with a maximal dimension of 40 µm.

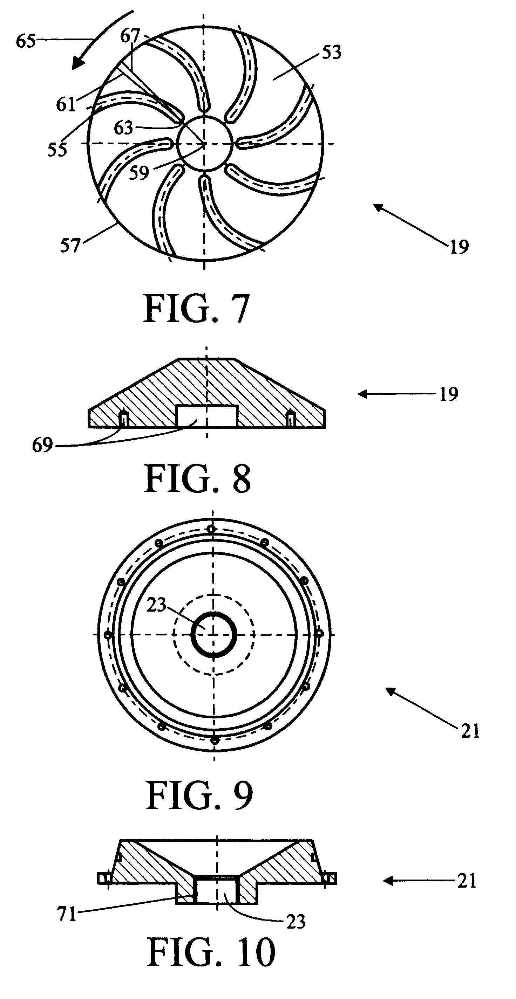

In Figures 7 through 10 the bearing support of the rotating element and the construction for the discharge of filtered out solid particles is shown. Figures 7 and 8 show respectively a bottom view and a cross section of the truncated conical end 19 of the rotating element. In the conical surface 53 of the end 19 there are the spiral grooves 55, whose depth decreases from the periphery 57 to the centre 59. The form of the spiral grooves 55 is such that a tangent 61 at the innermost point 63 of the spiral groove 55, viewed in rotational direction 65 of the end 19, is present behind the radius 67 through that innermost point 63. The end 19 is also provided with centring openings 69 for positioning on the rest of the rotating element.

Figures 9 and 10 show respectively a top view and a cross section of the bearing element 21 of the housing. The wall of the opening 23 of the funnel-shaped bearing element 21 is provided with screw thread 71 in which the adjustable seal can be fastened.

Although in the above the invention is explained on the basis of the drawings, it should be noted that the invention is in no way limited to the embodiment shown in the drawings. The invention also extends to all embodiments deviating from the embodiment shown in the drawings within the context defined by the claims. For example the flanks need not be comprised of straight surfaces but the flanks can also be curved. The lead angle 35 can also be 90° such that in fact a number of walls divided over the periphery are formed that are parallel to the longitudinal axis of the element 15.

## Claims

1. Device for separating solid particles from a substance consisting chiefly of liquid, comprising a cylindrical filter present in a housing, an inlet port to the cylindrical space inside the filter, an outlet port in the space between the filter and the housing and a rotating element present in the cylindrical space inside the filter, which element has two flanks of which during operation one is upstream and one is downstream, with the flank upstream has such a shape that the space between this flank and the filter narrows in the direction of flow, characterised in that the rotating element is formed by a screw-shaped element in which the flanks form the sides of the screw thread.

2. Device according to claim 1, characterised in that the flank of the screw thread present upstream during operation comprises at least one straight surface that is at an angle between 5° and 45° in relation to the filter.

3. Device according to claim 1 or 2, characterised in that the flank of the screw thread present downstream during operation has such a shape that the space between this flank and the filter widens in the direction of flow.

4. Device according to claim 3, characterised in that the flank of the screw thread present downstream during operation comprises at least one straight surface that is at an angle between 5° and 45° in relation to the filter.

5. Device according to one of the preceding claims, characterised in that between the two flanks the screw thread has a surface with at least virtually the same curvature as that of the filter.

6. Device according to one of the preceding claims, characterised in that the depth of the turns of the screw thread decreases from one end to the other end of the screw-shaped element.

7. Device according to one of the preceding claims, characterised in that the rotating element has an end that cooperates with a bearing element in the housing, in which the cooperating parts have congruent conical shapes and there is an opening in the bearing element and the end of the rotating element has the shape of a truncated cone and the bearing element in the housing is funnel-shaped and has an opening in the centre.

8. Device according to claim 7, characterised in that in one of the surfaces of the parts that cooperate with each other there are spiral-shaped grooves, preferably the spiral-shaped grooves are present in the conical surface of the end of the rotating element.

9. Device according to claim 8, characterised in that the spiral-shaped grooves become shallower from their periphery in the direction of the centre.

10. Device according to claim 8 or 9, characterised in that the portion of the tangent at the innermost point of a spiral-shaped groove, between that point and the periphery,viewed in rotational direction of the rotating element, is present behind the radius through that point or runs at least almost equal to the radius through this point.
